# EUROPÄISCHE PATENTSCHRIFT

(11) **EP 1 869 756 B1**
(45) Veröffentlichungstag und Bekanntmachung des Hinweises auf die Patenterteilung: **20.08.2008**
(21) Anmeldenummer: 06723871.7
(22) Anmeldetag: 30.03.2006
(51) Int. Cl.: H02K 41/03, F01L 9/04

(54) **LINEARAKTOR**
LINEAR ACTUATOR
ACTIONNEUR LINEAIRE

(30) Priorität: 15.04.2005 DE 102005017481
(43) Veröffentlichungstag der Anmeldung: 26.12.2007
(73) Patentinhaber: Compact Dynamics GmbH, 82319 Starnberg (DE)
(72) Erfinder: HOFFMANN, Bernhard, 82319 Starnberg (DE); GRÜNDL, Andreas, 82319 Starnberg (DE)
(74) Vertreter: Schmidt, Steffen J.
(86) Internationale Anmeldenummer: PCT/EP2006/002905
(87) Internationale Veröffentlichungsnummer: WO 2006/108513

(56) Entgegenhaltungen:
- EP-A- 0 501 661
- EP-A- 1 263 122
- DE-A1- 3 723 979
- US-A1- 2003 111 029
- PATENT ABSTRACTS OF JAPAN Bd. 1998, Nr. 11, 30. September 1998 (1998-09-30) -& JP 10 174418 A (YASKAWA ELECTRIC CORP), 26. Juni 1998 (1998-06-26)
- PATENT ABSTRACTS OF JAPAN Bd. 2003, Nr. 12, 5. Dezember 2003 (2003-12-05) & JP 2004 040990 A (RIKOGAKU SHINKOKAI), 5. Februar 2004 (2004-02-05)
- PATENT ABSTRACTS OF JAPAN Bd. 1996, Nr. 05, 31. Mai 1996 (1996-05-31) -& JP 08 023669 A (COPAL CO LTD), 23. Januar 1996 (1996-01-23)
- PATENT ABSTRACTS OF JAPAN Bd. 014, Nr. 573 (E-1015), 19. Dezember 1990 (1990-12-19) & JP 02 246761 A (HITACHI LTD), 2. Oktober 1990 (1990-10-02)
- PATENT ABSTRACTS OF JAPAN Bd. 007, Nr. 292 (E-219), 27. Dezember 1983 (1983-12-27) -& JP 58 165656 A (YASUKAWA DENKI SEISAKUSHO KK), 30. September 1983 (1983-09-30)

## Beschreibung

### Hintergrund der Erfindung

Die vorliegende Erfindung betrifft einen elektrisch zu betreibenden Linearaktor mit einem Läufer und einem Ständer, wobei der Läufer auf ein zu bewegendes Glied einzuwirken eingerichtet ist.

### Stand der Technik

Aus der JP-A-3-92518 ist eine Antriebseinrichtung bekannt, bei der der Ständer aus zwei etwa halbzylindrischen Schalen aufgebaut ist, die sowohl in Umfangsrichtung als auch in Längsrichtung jeder Schale geteilte, dem Läufer zugewandte Zähne aufweisen. Die einzelnen Zähne jeder Schale sind jeweils von einer Spule umgeben, deren Mittellängsachse in radialer Richtung verläuft. Dadurch ergibt sich ein in radialer Richtung orientierter magnetischer Fluss, der ausgehend von jedem einzelnen der Vielzahl von Zähnen, durch den Luftspalt zwischen Ständer und Läufer, in den Läufer fließt.

Eine insoweit übereinstimmende Ausgestaltung des Ständers, der Ständerspulen und des Läufers einer Antriebseinrichtung für eine Ventilanordnung in Verbrennungsmotoren ist in der US 5,129,369 beschrieben. Auch hier sind in radialer und tangentialer Richtung unterteilte Zähne des Ständers jeweils von einer Spule umgeben, deren Mittellängsachse in radialer Richtung verläuft.

Auch die EP 0 485 231 A1 zeigt eine ähnliche Art der Gestaltung des Ständers, der Ständerspulen und des Läufers einer Antriebseinrichtung für ein Ventil. Hier sind in radialer und tangentialer Richtung unterteilte Zähne des Ständers jeweils von einer radial orientierten Spule umgeben.

Diese Anordnungen erfordern in der Herstellung einen sehr hohen Aufwand, da die Montage der Spulen um die einzelnen Zähne herum schwierig zu realisieren ist. Außerdem ist die bei diesem Aufbau erzielbare Polteilung relativ groß. Ein zylindrisches Element, das an dem Ventil befestigt ist, enthält eine Vielzahl geschlossener Sekundärspulen, die in einem Magnetkern aus gepresstem oder gesintertem Magnetpulver ohne eine vorbestimmte magneti-sche Orientierung gehalten sind.

Aus der DE 10 2004 003 220 A1 (Continental Teves) ist ein Ventilantrieb für ein Gaswechselventil bekannt, mit einem magnetischen Läufer, der sich mit einem vom Gaswechselventil entfernt gelegenen Läuferabschnitt innerhalb einer Durchführung eines mit einer Stromspule versehenen Ständers längsbeweglich erstreckt. Der Ventilantrieb hat einen ein Magnetjoch bildenden Zahnbereich, sowie mit einem aus dem Ständer in Richtung des Gaswechselventils hervorstehenden Ende des Läufers, der bei Erregung einer Stromspule das Gaswechselventil betätigt. Der Läufer ist im Bereich des Läuferabschnitts als im Ständer vertikal bewegte Läuferplatte ausgeführt, in der in mehreren Ebenen mehrere Magnetstücke ausgerichtet sind. Beiderseits des Läuferabschnitts sind Paare von Stromspulen angeordnet, deren Mittellängsachse parallel zur Läuferbewegung orientiert ist. Quer zu den Stromspulen sind an deren Stirnflächen Ständerplatten mit zu dem Läufer gewandten Zahnbereichen angeordnet.

Aus der WO98/55741 ist ein elektrischer Wanderfeldmotor bekannt, der einen Läufer und einen Ständer aufweist. Der Ständer ist aus Blechen aufgebaut, deren Fläche senkrecht zur Bewegungsrichtung des Läufers orientiert ist. Der Ständer hat dem als Synchron- oder Asynchronläufer ausgebildeten Läufer zugewandte Zähne, die jeweils eine geschlossene, dem Läufer zugewandte Zylindermantelfläche haben. Jeweils zwischen zwei benachbarten Zähnen des Ständers sind Ständerspulenkammern gebildet, in denen jeweils eine parallel zu der Fläche der Bleche orientierte Spule angeordnet ist.

Aus der US 6,039,014 ist ein Linearmotor bekannt. Hierbei weist ein Ständer des Linearmotors mehrere Spulen auf, die jeweils durch einen ferromagnetischen Gehäuseabschnitt voneinander getrennt sind. Ein Läufer ist aus mehreren, aus einem dauermagnetischen Material bestehenden Abschnitten aufgebaut, zwischen denen jeweils aus einem ferromagnetischen Material bestehenden Abschnitten angeordnet sind.

Weitere Dokumente, die technischen Hintergrund für die Erfindung zeigen, sind ohne Anspruch auf Vollständigkeit: DE 33 07 070 A1, DE 35 00 530 A1, EP 244 878 B1, WO 90/07635, US 4,829,947, EP 377 244 B1, EP 347 211 B1, EP 390 519 B1, EP 328 194 B1, EP 377 251 B1, EP 312 216 B1, US 4,967,702, US 3,853,102, DE 10 2004 003220 A1, US 4,829,947, US 4,915,015, WO 90/07637, EP 244 878 B1, EP 328 195 A2. DE3723979 offenbart einen Reluktanzmotor mit Magnetleitstücken. EP0501661 offenbart einen Linearaktuator mit Permanentmagneten.

### Der Erfindung zugrunde liegendes Problem

Alle Konzepte, die in den vorstehend genannten Dokumenten beschrieben sind, haben gemeinsam, dass mit ihnen der für viele Anwendungsgebiete erforderliche Hub, Schub und Dynamik bei ausreichend kompaktem Aufbau und hoher Zuverlässigkeit nicht erreicht werden. Außerdem sind bekannte Anordnungen in der Herstellung sehr kostenintensiv und benötigen viel Bauraum.

### Erfindungsgemäße Lösung

Zur Behebung dieser Nachteile lehrt die Erfindung einen Linearaktor, der durch die Merkmale der Ansprüche 1 und 2 definiert ist.

### Aufbau, Weiterbildungen und Vorteile der erfindungsgemäßen Lösung

Erfindungsgemäß hat der Linearaktor einen Läufer und einem Ständer. Der Ständer ist zumindest teilweise aus einem weichmagnetischen Material gebildet und weist wenigstens ein Zahnpaar mit einander gegenüberstehenden Zähnen auf, von denen jedes Zahnpaar einen Stapel zwischen sich unter Bildung eines jeweiligen Luftspaltes aufnimmt. Der Ständer weist wenigstens zwei magnetisch leitende innere Bereiche auf, die an ihren, dem Läufer zugewandten Enden wenigstens einen der Zähne aufweisen, und die in der Bewegungsrichtung des Läufers voneinander in einem vorbestimmten Abstand angeordnet sind und jeweils zumindest teilweise von einer im Wesentlichen hohlzylindrischen Spulenanordnung umgeben sind, deren Mittellängsachse etwa quer zu der Bewegungsrichtung des Läufers orientiert ist. In seiner einfachsten Ausgestaltung hat der Läufer einen Stapel übereinander angeordneter, dauermagnetischer Stäbe. Seitlich daneben sind auf einer Seite des Läufers die Spulenanordnung des Ständers sowie die von den Spulenanordnungen umgebenen wenigstens zwei magnetisch leitenden inneren Bereiche angeordnet, wobei der Läufer wenigstens einen Stapel übereinander angeordneter, dauermagnetischer Stäbe aufweist, und wobei benachbarte Stäbe eines Stapels eine abwechselnde magnetische Orientierung haben, die im Wesentlichen mit der Mittellängsachse zweier einander gegenüberstehender Zähne eines Zahnpaares fluchtet.

Dabei hat die Erfindung erkannt, dass bei einer solchen Anordnung die beiden Spulenanordnungen so betrieben werden können, dass der magnetische Fluss durch den einen der beiden magnetisch leitenden inneren Bereiche zu jedem Zeitpunkt im Wesentlichen gegengleich zum magnetischen Fluss durch den anderen magnetisch leitenden inneren Bereich ist. Somit bildet die Gesamtanordnung aus den beiden Spulenanordnungen mit der zugehörigen Ständeranordnung im Zusammenspiel mit den dauermagnetischen Läuferstäben einen in sich geschlossener Magnetkreis. Mit anderen Worten kann bei der Erfindung der von der einen Spulenanordnung in die eine Richtung induzierte magnetische Fluss von der anderen Spulenanordnung zur gleichen Zeit in die andere Richtung induziert werden, so dass sich der Kreis schließt.

Erfindungsgemäß kann der Läufer zwei oder mehr voneinander in einem vorbestimmten Abstand angeordnete Stapel dauermagnetischer Stäbe aufweisen und die magnetisch leitenden inneren Bereiche des Ständers können zwischen den Stapeln des Läufers angeordnet sein.

Ein weiteres der Erfindung zugrunde liegendes Konzept besteht darin, den die Ankerdurchflutung bewirkenden Teil des Ständers, nämlich den Spulenbereich mit der Ständerspulenanordnung räumlich aus dem die Kraft des Linearaktors bildenden Teil, nämlich dem Zahnbereich des Ständers "herauszutrennen". Damit kann im Vergleich zu herkömmlichen Linearmotoren, bei denen die Ständerspulen jeweils zwischen zwei Zähnen des Ständers angeordnet sind, eine erheblich höhere Ankerdurchflutung erreicht werden. Dies liegt daran, dass die Spule durch die erfindungsgemäße Gestaltung erheblich weniger räumliche Einschränkungen hat und so auf minimale (ohmsche) Verluste - und damit einhergehende maximale Magnetfeldinduktion - optimiert werden kann. Die Anordnung der Ständerspulenanordnung, deren Mittellängsachse quer zur Bewegungsrichtung des Läufers orientiert ist oder mit anderen Worten im Wesentlichen mit der Mittellängsachse zweier einander gegenüberstehender Zähne eines Zahnpaares fluchtet, ist magnetisch besonders effizient, da der durch eine so orientierte Spule induziert magnetische Fluss durch die zu beiden Stirnseiten der Spule befindlichen Zahnpaare gleichermaßen fließt. Damit wird in beiden Stapeln der dauermagnetischen Stäbe eine übereinstimmende Kraft erzeugt. Dies vermeidet ohne weitere besondere Maßnahmen einen Schräglauf des Läufers.

Die Erfindung sieht weiterhin vor, dass die hohlzylindrische Spulenanordnung einen im Wesentlichen rechteckigen Querschnitt gesehen längs ihrer Mittellängsachse M hat. Damit umschließt eine in der Außenkontur im Wesentlichen rechteckige Spule mit einer ebenfalls im Wesentlichen rechteckigen Ausnehmung die jeweiligen magnetisch leitenden inneren Bereiche des Ständers.

Durch die Abmessungen der dauermagnetischen Stäbe in der Bewegungsrichtung des Läufers bzw. die Abmessungen eines Zahns des Ständers in der Bewegungsrichtung des Läufers ist eine Polteilung definiert, die kleiner ist als die Abmessung der Ständerspule in deren Längsrichtung.

Gleichermaßen werden die Kraft bzw. Bewegung hervorrufenden Läufermagnetpol/Ständerzahn-Anordnungen konzentriert, so dass diese nicht durch Ständerspulenanordnungen unterbrochen sind. Dies erlaubt eine sehr kleine Polteilung, welche wiederum eine hohe Kraftdichte bewirkt. Außerdem sind mit der erfindungsgemäßen Anordnung Teilhübe des Läufers möglich.

Ein weiterer wesentlicher Vorteil des erfindungsgemäßen Linearaktors besteht darin, dass praktisch nur die magnetisch wirksamen Komponenten (die Dauermagnete) zur trägen Masse des Läufers beitragen, während alle anderen Teile des Motors (Spulen, magnetischer Rückschluss, etc.) dem Ständer zugeordnet sind. Damit kann ein besonders hohes Verhältnis von durch den Aktor ausgeübter Kraft zu träger Masse erzielt werden.

Durch die sehr einfach gestaltbare (einphasige und hohlzylindrische, zum Beispiel im Querschnitt rechteckige) Anordnung der Ständerspulenanordungen ist es möglich, den Einfluss der auf die Spule wirkenden Rüttelkräfte gering zu halten, so dass Vibrationen der Spule oder Reibung der Spule an der Wandung der Ständerspulenkammer gering sind. Damit ist es möglich, mit minimalem Isolationsmaterial bzw. Auskleidungsmaterial der Ständerspulenkammer auszukommen. Auch dies trägt zur Kompaktheit und Zuverlässigkeit der Gesamtanordnung bei. Außerdem bewirkt der einfache Aufbau eine hohe Leistungsdichte auch bei kleinen Linearaktoren, da der erzielbare Füllfaktor der Ständerspulenkammer (Spulenvolumen in der Ständerspulenkammer bezogen auf das Gesamtvolumen der Ständerspulenkammer) hoch ist.

Jeder Zahn kann erfindungsgemäß in der Bewegungsrichtung des Läufers eine Abmessung aufweisen, die im wesentlichen mit der Abmessung eines dauermagnetischen Stabes in der Bewegungsrichtung des Läufers übereinstimmt, so dass in einer vorbestimmten Stellung des Läufers wenigstens ein Zahnpaar des Ständers mit jeweils einem dauermagnetischen Stab fluchtet.

Vorzugsweise sind in der Bewegungsrichtung des Läufers sind benachbarte Zahnpaare des Ständers relativ zu der Abmessung der dauermagnetischen Stäbe in der Bewegungsrichtung des Läufers so bemessen, dass, zwischen zwei dauermagnetischen Stäben, die mit zwei einander benachbarten Zahnpaaren des Ständers fluchten, wenigstens ein weiterer der dauermagnetischen Stäbe angeordnet ist.

Erfindungsgemäß können die magnetisch leitenden inneren Bereiche an ihren, dem Läufer zugewandten Ende wenigstens einen der Zähne aufweisen. Im Fall von einem Läufer mit zwei oder mehreren Stapeln haben die zwischen den beiden Stapeln befindlichen magnetisch leitenden inneren Bereiche des Ständers an ihren, den Stapeln des Läufers zugewandten Enden die Zähne.

Im Fall von einem Läufer mit zwei Stapeln kann der Ständer auch zwei außerhalb der beiden Stapel des Läufers liegende magnetisch leitende äußere Bereiche aufweisen, die an ihren, den Stapeln zugewandten Enden die Zähne aufweisen.

Erfindungsgemäß ist der außen liegende Bereich des Ständers zumindest in einem Teilabschnitt im Querschnitt im Wesentlichen kammförmig gestaltet. Dabei bilden die Zähne des Kamms die äußeren (außenliegenden) Zähne der Zahnpaare.

Erfindungsgemäß kann die Mittellängsachse der Spulenanordnung etwa quer zur Bewegungsrichtung des Läufers orientiert sein. Gleichermaßen kann erfindungsgemäß die Mittellängsachse der Spulenanordnung etwa mit der Mittellängsachse zweier einander gegenüberstehender Zähne eines Zahnpaares fluchten oder zumindest abschnittsweise im Wesentlichen parallel zu ihr orientiert sein. Dies erlaubt eine abgekröpfte Gestaltung der inneren Bereiche des Ständers, zum Beispiel um entsprechenden Montageraum für die Spulenanordnungen zu erhalten.

Der vorbestimmte Abstand zwischen den zwei magnetisch leitenden inneren Bereichen kann in Übereinstimmung mit der Erfindung so bemessen sein, dass er im Wesentlichen mit der Abmessung einer geraden Anzahl von dauermagnetischen Stäben der beiden Stapel in der Bewegungsrichtung des Läufers übereinstimmt.

Jeweils zwei benachbarte dauermagnetische Stäbe der beiden Stapel des Läufers können erfindungsgemäß durch magnetisch nicht wirksame Abstandshalter in einem vorbestimmten Abstand miteinander verbunden sein. Diese Abstandshalter können ein magnetisch nicht wirksames Leichtmaterial (Aluminium, Titan, Kunststoff - auch mit Glasfaser- oder Kohlefasereinlagerungen - oder dergl.) enthalten. Damit ist die träge Masse des Läufers gering aber seine Stabilität hoch.

Durch die Abmessungen der dauermagnetischen Stäbe in der Bewegungsrichtung des Läufers und die Abmessungen der Zähne des Ständers in der Bewegungsrichtung des Läufers kann erfindungsgemäß eine Polteilung definiert sein, die kleiner ist als die Abmessung der Ständerspulenanordnung in der Bewegungsrichtung des Läufers.

Der/die äußeren Bereich/e des Ständers können erfindungsgemäß zusätzlich oder an Stelle der inneren Bereiche des Ständers wenigstens eine Ständerspule aufweisen.

Die Abmessung der Spulenanordnung des Ständers in Bewegungsrichtung des Läufers kann erfindungsgemäß größer sein als der Abstand zwischen zwei benachbarten Zahnpaaren des Ständers.

Der Ständer (der innere und/oder der äußere magnetisch leitende Bereich) ist wegen des praktisch ausschließlich zweidimensionalen Magnetflussverlaufs durch den Ständer vorzugsweise aus Elektroblechteilen aufgebaut. Es ist jedoch auch möglich, ihn zumindest teilweise als einen weichmagnetischen Formkörper, vorzugsweise aus gepresstem und/oder gesintertem Metallpulver herzustellen.

Erfindungsgemäß bilden die äußeren Bereiche des Ständers zumindest teilweise einen magnetischen Rückschlusskörper.

Durch die hohe Leistungsdichte der erfindungsgemäßen Anordnung können die Querabmessungen des Linearaktors mit den notwendigen Leistungsdaten sehr klein gehalten werden. Dies erlaubt den Einsatz in beengten Bauräumen.

Weitere Merkmale, Eigenschaften, Vorteile und mögliche Abwandlungen werden anhand der nachstehenden Beschreibung erläutert, in der auf die beigefügten Zeichnungen Bezug genommen ist.

### Kurzbeschreibung der Zeichnungen

In Fig. 1 ist eine Ausführungsform eines erfindungsgemäßen Linearaktors schematisch in perspektivischem Längsschnitt veranschaulicht.

In Fig. 2 ist eine Ausführungsform einer Spulenanordnung des erfindungsgemäßen Linearaktors schematisch in perspektivischer Draufsicht veranschaulicht.

In Fig. 3 ist eine Ausführungsform eines Ständers des erfindungsgemäßen Linearaktors schematisch in perspektivischer Draufsicht veranschaulicht.

In Fig. 4 ist eine Ausführungsform eines Stapels aus Magnetstäben des erfindungsgemäßen Linearaktors schematisch in perspektivischer Draufsicht veranschaulicht.

In Fig. 5 ist eine Ausführungsform eines erfindungsgemäßen Linearaktors schematisch in perspektivischem Längsschnitt veranschaulicht.

### Detaillierte Beschreibung derzeit bevorzugter Ausführungsformen

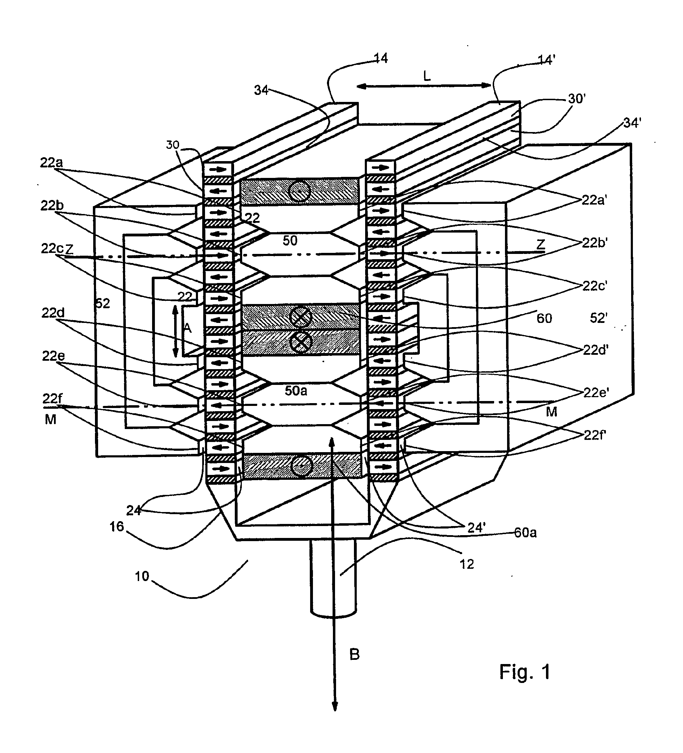

In Fig. 1 ist eine erste Ausführungsform eines elektrischen Linearaktors 10 veranschaulicht, der einen mit einem - nicht veranschaulichten - anzutreibenden Teil über eine Stange 12a gekoppelten Läufer 16 und einen Ständer 18 hat.

Der Läufer 16 hat zwei voneinander in einem Abstand L angeordnete parallele Stapel 14, 14' aus einer Vielzahl übereinander angeordneter, dauermagnetischer Stäbe 30, 30' mit im Wesentlichen quaderförmiger Gestalt.

Der Ständer 18 ist als weichmagnetischer Formkörper aus gesintertem Eisen-Metallpulver oder aus geschichteten Eisenblechen gebildet. Der Ständer 18 hat mehrere Zahnpaare 22a, 22a'; 22b, 22b'; 22c, 22c'; 22d, 22d'; 22e, 22e'; 22f, 22f' mit einander gegenüberstehenden Zähnen 22. Zwischen den Zähnen 22 eines Zahnpaares ist jeweils einer der beiden Stapel 14, 14' unter Bildung eines Luftspaltes 24 bzw. 24' aufgenommen.

Zwischen den beiden Stapeln 14, 14' des Läufers 16 hat der Ständer 18 magnetisch leitende innere Bereiche 50, 50a, die in der Bewegungsrichtung B des Läufers 16 voneinander in einem vorbestimmten Abstand A angeordnet sind. Jeder der beiden inneren Bereiche 50, 50a des Ständers 18 ist jeweils von einer im Wesentlichen hohlzylindrischen Spulenanordnung 60, 60a umgeben. Die Mittellängsachse M der jeweiligen Spulenanordnungen 60, 60a verläuft etwa quer zu der Bewegungsrichtung B des Läufers 16. Die Spulenanordnung 60, 60a ist zum Erzielen eines möglichst hohen Füllfaktors als Kupferbandspule ausgeführt.

Die beiden Spulenanordnung 60, 60a sind so mit Strom zu beaufschlagen, dass sie jeweils ein Magnetfeld in entgegen gesetzter Richtung erzeugen. In Fig. 1 erzeugt die obere Spulenanordnung 60 in der gezeigten Stellung des Läufers 16 ein Magnetfeld, das im Wesentlichen längs der Mittellängsachse der Spulenanordnung 60 von links nach rechts orientiert ist, während die untere Spulenanordnung 60a in der gezeigten Stellung des Läufers 16 ein Magnetfeld erzeugt, das im Wesentlichen längs der Mittellängsachse der Spulenanordnung 60 von rechts nach links orientiert ist. Dies wechselt, um den Läufer 16 längs der Bewegungsrichtung B (auf oder ab) zu treiben.

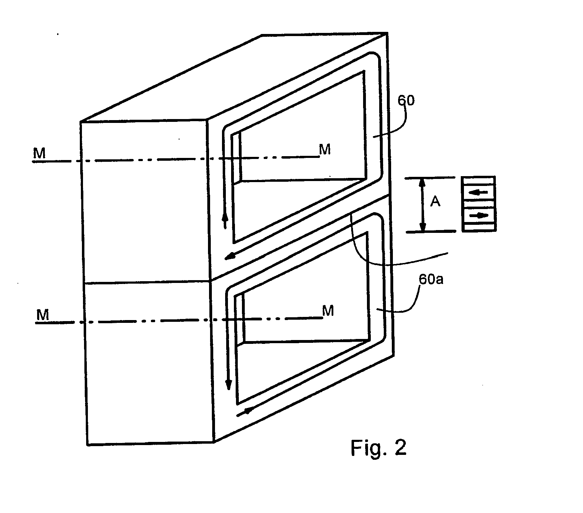

Da jede Spulenanordnung 60, 60a über ihre gesamte Erstreckung den jeweiligen der beiden inneren Bereiche 50, 50a des Ständers 18 vollständig umgibt, kann sie mit maximalem Wicklungsraum ausgefüllt sein. Wie in den Fig. 1 und 2 durch entsprechende Pfeile - bzw. Pfeilspitzen und Pfeilenden - veranschaulicht, sind die beiden Spulenanordnungen 60, 60a so zu bestromen, dass sie in dem mittleren Abschnitt 64, in dem sie aneinander anliegen, jeweils Strom in der gleichen Richtung führen (siehe Fig. 2).

In der gezeigten Anordnung ist der Läufer 16 aus zwei parallel ausgerichteten Stapeln 14, 14' gebildet, dessen Magnetstäbe aus dauermagnetischem Material (zum Beispiel Samarium-Cobalt) gebildet sind. Die einzelnen Magnetstäbe 30 sind bündig übereinander angeordnet, wobei die magnetische Orientierung der Magnetstäbe 30 abwechselnd (vom inneren Bereich des Ständers 18 nach außen und umgekehrt) ausgerichtet ist. Außerdem sind die Magnetstäbe 30 in ihren Abmessungen so gestaltet, dass in einer vorbestimmten Stellung des Läufers 16 einer der Magnetstäbe 30 zwischen zwei Zähnen 22 eines Zahnpaares des Ständers 18 fluchtet. Benachbarte Stäbe 30, 30' eines Stapels 14, 14' haben eine abwechselnde magnetische Orientierung N -> S, S <- N. Jeder dieser Stäbe fluchtet damit in bestimmten Stellungen des Läufers 14 mit Zähnen 22 des Ständers 18. In diesen Flucht-Stellungen fällt auch die Mittellängsachse Z zweier einander gegenüberstehender Zähne 22 eines Zahnpaares im Wesentlichen mit der magnetischen Orientierung des jeweiligen fluchtenden Stabes zusammen. Ersichtlich ist auch die Mittellängsachse M der Spulenanordnung 60 etwa quer zur Bewegungsrichtung des Läufers 16 orientiert und fluchtet etwa mit der Mittellängsachse zweier einander gegenüberstehender Zähne eines Zahnpaares.

Zwischen zwei benachbarten Magnetstäben 30 eines Stapels 14, 14' sind zur Verringerung der trägen Masse des Läufers 16 magnetisch nicht wirksame, ebenfalls quaderförmige Abstandshalter 34, 34' aus Kunststoff, zum Beispiel aus kohlefaserverstärktem Kunststoff eingefügt. Die zueinander benachbarten Dauermagnetstäbe 30 und die magnetisch nicht wirksamen Abstandshalter 34, 34' sind fest mit einander verbunden. Mit anderen Worten befinden sich im beweglichen Teil des Aktors (dem Läufer) keine Magnetfluss leitenden Teile (wie zum Beispiel Fluss-Leitstücke), sondern nur Dauermagnete, die stets optimal im magnetischen Feld angeordnet sind. Diese Anordnung hat auch den Vorteil einer Gewichtseinsparung. Sofern quaderförmige Stäbe aus dauermagnetischem Material nicht mit ausreichender magnetischer Feldstärke zur Verfügung stehen, ist es erfindungsgemäß auch möglich, die Stäbe aus Dauermagnetsegmenten so zusammenzusetzen, dass ein (von innen nach außen oder umgekehrt) gerichtetes Magnetfeld quer zur Bewegungsrichtung des Läufers 16 entsteht.

Der Ständer 18 hat des Weiteren zwei außerhalb der beiden Stapel 14, 14' des Läufers 16 liegende, magnetisch leitende äußere Bereiche 52 52', die wegen der praktisch ausschließlich zweidimensionalen Magnetflussführung bevorzugt als Eisenblechpakete hergestellt sind. Es ist jedoch ebenfalls möglich, diese als weichmagnetische Formkörper aus gesintertem Eisen-Metallpulver zu formen. Diese außen liegenden Bereiche 52, 52' des Ständers 18 im Querschnitt im Wesentlichen kammförmig gestaltet und haben an ihren, den Stapeln 14, 14' des Läufers 16 zugewandten Enden Zähne 22, die in ihrer Form den Zähnen der innen liegenden Bereiche 50, 50a des Ständers 18 spiegelbildlich entsprechen.

Zwischen den magnetisch leitenden inneren Bereichen 50, 50a liegt ein vorbestimmter Abstand A, der so bemessen ist, dass er im Wesentlichen mit der Abmessung einer geraden Anzahl (in der gezeigten Ausführungsform sind es zwei) von dauermagnetischen Stäben 30, 30' der beiden Stapel 14, 14' (mit zugehörigen Abstandshaltern) in der Bewegungsrichtung B des Läufers 16 übereinstimmt. Die Länge der außen liegenden, im Querschnitt kammförmig gestalteten Bereiche 52, 52' des Ständers 18 ist so bemessen, dass den Magnetstäben des Läufers 16 zugewandte, korrespondierende Zähne 22 an beiden Enden jeweils einem Magnetstab unterschiedlicher Orientierung gegenüberstehen. Mit anderen Worten fluchten in einer bestimmten Stellung des Läufers die Zähne 22 des Zahnpaares 22d mit einem nach außen orientierten Magnetstab, während die Zähne 22 des korrespondierenden Zahnpaares 22c mit einem nach innen orientierten Magnetstab fluchten. Entsprechendes gilt für die Zähne 22 des Zahnpaares 22e, die mit den Zähnen 22 des Zahnpaares 22b korrespondieren, so-wie für die Zähne 22 des Zahnpaares 22f, die mit den Zähnen 22 des Zahnpaares 22a korrespondieren. Damit bilden die äußeren Bereiche 52 des Ständers 18 einen magnetischen Rückschlusskörper. In der Fig. 1 sind die kammförmigen Bereiche der äußeren Bereiche 52, 52' des Ständers 18 als drei einzelne ineinander gesteckte C-förmige Joche veranschaulicht. Es ist jedoch auch möglich, die beiden äußeren Bereiche 52, 52' des Ständers 18 jeweils als Paket aus einstückigen weichmagnetischen kammförmigen Blechen, die jeweils die Zähne aufweisen, zu gestalten. Ein wesentlicher Vorteil der erfindungsgemäßen Anordnung der/des äußeren Bereiche/s des Ständers 18 liegt darin, dass praktisch kein magnetischer Streufluss in die Umgebung abgegeben wird. Dies ist insbesondere bei Anordnungen von Bedeutung, wo eine Mehrzahl von derartigen Linearaktoren auf dichtem Raum positioniert ist, deren Ansteuerung zueinander unterschiedlich ist. Dies gilt zum Beispiel für einen mehrventiligen Zylinder eines Verbrennungsmotors.

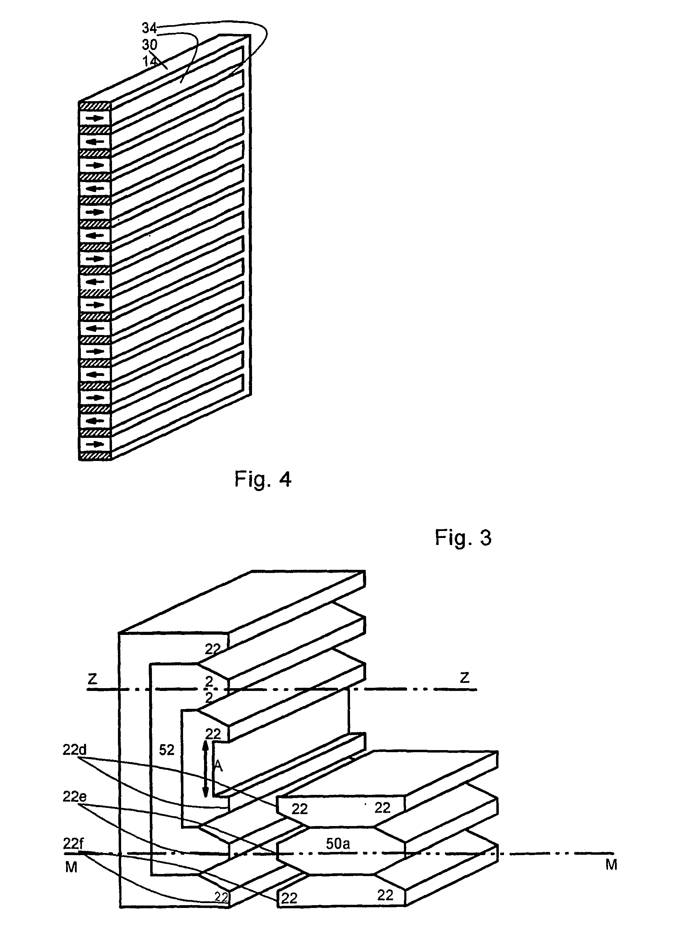

Zur besseren Veranschaulichung ist in Fig. 3 der Ständer 18 mit seinen inneren 50, 50a und äußeren Bereichen 52, 52' freigestellt gezeigt. Dabei ist einer der äußeren Bereichen 52' und der obere innere Bereich 50 weggelassen. In der Zeichnung nicht veranschaulicht, aber im Bereich der Erfindung liegt es, dass die äußeren Bereiche 52, 52' des Ständers 18 zusätzlich oder an Stelle der inneren Bereiche 52 des Ständers 18 wenigstens eine Ständerspule aufweisen. Ersichtlich ist die Abmessung der Spulenanordnung 60, 60a in Bewegungsrichtung des Läufers 16 größer ist als der Abstand zwischen zwei benachbarten Zahnpaaren des Ständers 18.

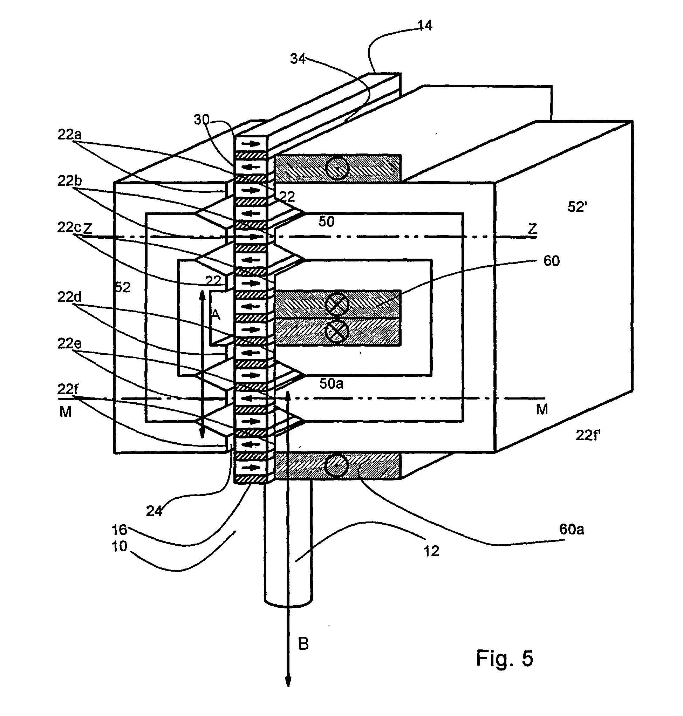

In Fig. 5 ist eine zweite Ausführungsform eines elektrischen Linearmotors 10 veranschaulicht. Dabei bezeichnen in den vorherigen Fig. verwendete Bezugszeichen Teile oder Komponenten mit gleicher oder vergleichbarer Funktion oder Wirkungsweise und sind daher nachstehend nur in so weit erneut verläutert, als ihre konkrete Ausgestaltung, Funktion oder Wirkungsweise von der oben beschriebenen abweicht.

Bei dieser Ausführungsform hat der Läufer 16 einen Stapel 14 aus einer Vielzahl übereinander angeordneter, dauermagnetischer Stäbe 30 mit im Wesentlichen quaderförmiger Gestalt. Der Ständer 18 ist als weichmagnetischer Blechpaketstapel gebildet. Der Ständer 18 hat mehrere Zahnpaare 22a ... 22f mit einander gegenüberstehenden Zähnen 22. Zwischen den Zähnen 22 eines Zahnpaares ist der Stapel 14 unter Bildung eines Luftspaltes 24 bzw. 24' aufgenommen.

Auf der einen Seite des Stapels 14 des Läufers 16 (in Fig. 5 auf der rechten Seite) hat der Ständer 18 zwei magnetisch leitende innere Bereiche 50, 50a, die in der Bewegungsrichtung B des Läufers 16 voneinander in einem vorbestimmten Abstand A angeordnet sind. Jeder der beiden inneren Bereiche 50, 50a des Ständers 18 ist jeweils von einer im Wesentlichen hohlzylindrischen Spulenanordnung 60, 60a umgeben. Diese beiden inneren Bereiche 50, 50a des Ständers 18 bilden praktisch die Schenkel eines liegenden "U", dessen Verbindungsjochdurch einen magnetisch leitenden äußeren Bereich 52' gebildet ist. Mit anderen Worten ist bei dieser Ausführungsform der zweite Stapel des Läufers weggelassen und das Statoreisen durchgehend geformt. Der außerhalb des Läufers 16 liegende außen liegende Bereich 52 des Ständers 18 ist im Querschnitt im Wesentlichen kammförmig gestaltet und hat an seinen, dem Stapeln 14 des Läufers 16 zugewandten Ende Zähne 22, die in ihrer Form den Zähnen der innen liegenden Bereiche 50, 50a des Ständers 18 spiegelbildlich entsprechen.

Auch bei dieser Ausführungsform liegt zwischen den magnetisch leitenden inneren Bereichen 50, 50a ein vorbestimmter Abstand A, der so bemessen ist, dass er im Wesentlichen mit der Abmessung einer geraden Anzahl (in der gezeigten Ausführungsform sind es zwei) von dauermagnetischen Stäben 30, 30' der beiden Stapel 14, 14' (mit zugehörigen Abstandshaltern) in der Bewegungsrichtung B des Läufers 16 übereinstimmt. Gleichermaßen ist die Länge der im Querschnitt kammförmig gestalteten Bereiche 52, 52' des Ständers 18 so bemessen, dass den Magnetstäben des Läufers 16 zugewandte, korrespondierende Zähne 22 an beiden Enden jeweils einem Magnetstab unterschiedlicher Orientierung gegenüberstehen.

Die erläuterten Ausführungsformen eignen sich besonders, den geforderten Hub von etwa 10 - 200 mm mit der erforderlichen Dynamik in relativ schmalen Bauraum zu realisieren.

Vorstehend sind einphasig zu betreibende Linearaktoren beschrieben. Es ist jedoch auch im Bereich der vorliegenden Erfindung, ein zwei- oder mehrphasige Anordnung des Linearaktors zu gestalten. Dazu sind die Zähne eines weiteren Statorensystems mit zugehörigen Spulen entsprechend dem/den vorgesehenen Phasenversätzen der elektrischen Antriebsleistung geometrisch entlang des Magneten des Läufers versetzt zu positionieren.

Es versteht sich für einen Fachmann, dass einzelne Aspekte oder Merkmale der vorstehend beschriebenen unterschiedlichen Ausführungsformen auch untereinander kombinierbar sind.

## Patentansprüche

1. Linearaktor mit einem Läufer (16) und einem Ständer (18), wobei
• der Läufer (16) wenigstens zwei Stapel (14, 14') übereinander angeordneter, dauermagnetischer Stäbe (30, 30') aufweist,
• der Ständer (18)
- magnetisch leitende innere (50, 50a) und äußere (52, 52') Bereiche aufweist,
- zumindest teilweise aus einem weichmagnetischen Material gebildet ist,
- wenigstens ein Zahnpaar (22a, 22a'; 22b, 22b'; 22c, 22c'; 22d, 22d'; 22e, 22e'; 22f, 22f') mit einander gegenüberstehenden Zähnen (22) aufweist, von denen jedes Zahnpaar einen Stapel (14, 14') zwischen sich unter Bildung eines jeweiligen Luftspaltes (24, 24') aufnimmt,
- wenigstens zwei magnetisch leitende innere Bereiche (50, 50a) aufweist, die an ihren, dem Läufer (16) zugewandten Enden wenigstens einen der Zähne (22) aufweisen, und die in der Bewegungsrichtung (B) des Läufers (16) voneinander in einem vorbestimmten Abstand (A) angeordnet sind und jeweils zumindest teilweise von einer im Wesentlichen hohlzylindrischen Spulenanordnung (60, 60a) umgeben sind, deren Mittellängsachse (M) und deren magnetischer. Fluss etwa quer zu der Bewegungsrichtung (B) des Läufers (16) und zumindest abschnittsweise im Wesentlichen parallel zu der Mittellängsachse zweier einander gegenüberstehender Zähne eines Zahnpaares orientiert ist, wobei
• benachbarte Stäbe (30, 30') eines Stapels (14, 14') des Läufers (16) eine abwechselnde magnetische Orientierung (N -> S, S <- N) haben, und die im Wesentlichen mit der Mittellängsachse (Z) zweier einander gegenüberstehender Zähne (22) eines Zahnpaares (22a, 22a'; 22b, 22b'; 22c, 22c'; 22d, 22d'; 22e, 22e'; 22f, 22f) fluchten,
• die inneren Bereiche (50, 50a) des Ständers (18) sich zwischen den Stapeln (14, 14') des Läufers (16) befinden und an ihren den Stapeln (14, 14') zugewandten Enden Zähne aufweisen,
• der Ständer (18) wenigstens zwei außerhalb des Stapels (14, 14') des Läufers (16) liegende magnetisch leitende äußere Bereiche aufweist, die an ihren, den Stapeln (14, 14') des Läufers (16) zugewandten Ende wenigstens einen der Zähne aufweisen,
• die äußeren Bereiche (52) des Ständers (18) kammförmig sind und einen magnetischen Rückschlusskörper in der Bewegungsrichtung des Läufers (16) bilden und als ineinander gesteckte C-förmige Joche ausgebildet sind, und
• jede Spulenanordnung (60, 60a) den jeweiligen der beiden inneren Bereiche (50, 50a) des Ständers (18) vollständig über ihre gesamte Erstreckung umgibt.

2. Linearaktor mit einem Läufer (16) und einem Ständer (18), wobei
• der Läufer (16) wenigstens einen Stapel (14, 14') übereinander angeordneter, dauermagnetischer Stäbe (30, 30') aufweist
• der Ständer (18)
- magnetisch leitende innere (50, 50a) und äußere (52, 52') Bereiche aufweist,
- zumindest teilweise aus einem weichmagnetischen Material gebildet ist,
- wenigstens ein Zahnpaar (22a, 22a'; 22b, 22b'; 22c, 22c'; 22d, 22d'; 22e, 22e'; 22f, 22f) mit einander gegenüberstehenden Zähnen (22) aufweist, von denen jedes Zahnpaar einen Stapel (14) des Läufers zwischen sich unter Bildung eines jeweiligen Luftspaltes (24, 24') aufnimmt,
- wenigstens zwei magnetisch leitende innere Bereiche (50, 50a) aufweist, die an ihren, dem Läufer (16) zugewandten Enden wenigstens einen der Zähne (22) aufweisen, und die in der Bewegungsrichtung (B) des Läufers (16) voneinander in einem vorbestimmten Abstand (A) angeordnet sind und jeweils zumindest teilweise von einer im Wesentlichen hohlzylindrischen Spulenanordnung (60, 60a) umgeben sind, deren Mittellängsachse (M) und deren magnetischer Fluss etwa quer zu der Bewegungsrichtung (B) des Läufers (16) und zumindest abschnittsweise im Wesentlichen parallel zu der Mittellängsachse zweier einander gegenüberstehender Zähne eines Zahnpaares orientiert ist, wobei
• benachbarte Stäbe (30, 30') eines Stapels des Läufers (16) eine abwechselnde magnetische Orientierung (N -> S, S <- N) haben, und die im Wesentlichen mit der Mittellangsachse Z zweier einander gegenüberstehender Zähne (22) eines Zahnpaares (22a, 22a'; 22b, 22b'; 22c, 22c'; 22d, 22d'; 22e, 22e'; 22f, 22f) fluchten,
• auf der einen Seite des Stapels (14) des Läufers (16) der Ständer (18) zwei magnetisch leitende innere Bereiche (50, 50a) hat, die in der Bewegungsrichtung (B) des Läufers (16) voneinander in einem vorbestimmten Abstand (A) angeordnet sind, und die an ihren, dem Läufer (16) zugewandten Enden wenigstens einen der Zähne (22) aufweisen,
• jeder der beiden inneren Bereiche (50, 50a) des Ständers (18) jeweils von einer im Wesentlichen hohlzylindrischen Spulenanordnung (60, 60a) umgeben ist, deren Mittellängsachse (M) und deren magnetischer Fluss etwa quer zu der Bewegungsrichtung (B) des Läufers (16) und zumindest abschnittsweise im Wesentlichen parallel zu der Mittellängsachse zweier einander gegenüberstehender Zähne eines Zahnpaares orientiert ist,
• die beiden inneren Bereiche (50, 50a) des Ständers (18) die Schenkel eines liegenden "U" bilden, dessen Verbindungsjoch durch einen magnetisch leitenden äußeren Bereich (52') gebildet ist,
• der außerhalb des Läufers (16) liegende außen liegende Bereich (52) des Ständers (18) im Querschnitt im Wesentlichen kammförmig gestaltet ist und an seinem, dem Stapeln (14) des Läufers (16) zugewandten Ende Zähne (22) hat, die in ihrer Form den Zähnen der innen liegenden Bereiche (50, 50a) des Ständers (18) spiegelbildlich entsprechen, und
• die äußeren Bereiche (52, 52') des Ständers (18) kammförmig sind, einen magnetischen Rückschlusskörper in der Bewegungsrichtung des Läufers bilden und als ineinander gesteckte C-förmige Joche ausgebildet sind.

3. Linearaktor nach Anspruch 1 oder 2, **dadurch gekennzeichnet, dass** der Läufer (16) zwei oder mehr voneinander in einem vorbestimmten Abstand angeordnete Stapel (14, 14') dauermagnetischer Stäbe (30, 30') aufweist, und die magnetisch leitenden inneren Bereiche (50, 50a) des Ständers (18) zwischen den Stapeln (14, 14') des Läufers (16) angeordnet sind.

4. Linearaktor nach Anspruch 3, **dadurch gekennzeichnet, dass** die hohlzylindrische Spulenanordnung (60, 60a) einen im Wesentlichen rechteckigen Querschnitt aufweist.

5. Linearaktor nach Anspruch 3 oder 4, **dadurch gekennzeichnet, dass** jeder Zahn (22) in der Bewegungsrichtung B des Läufers (16) eine Abmessung aufweist, die im wesentlichen mit der Abmessung eines dauermagnetischen Stabes (30, 30') in der Bewegungsrichtung B des Läufers (16) übereinstimmt, so dass in einer vorbestimmten Stellung des Läufers (16) wenigstens ein Zahnpaar des Ständers (18) mit einem dauermagnetischen Stab (30, 30') fluchtet.

6. Linearaktor nach Anspruch 5, **dadurch gekennzeichnet, dass** in der Bewegungsrichtung B des Läufers (16) benachbarte Zahnpaare des Ständers (18) relativ zu der Abmessung der dauermagnetischen Stäbe (30, 30') in der Bewegungsrichtung B des Läufers (16) so bemessen sind, dass, zwischen zwei dauermagnetischen Stäben, die mit zwei einander benachbarten Zahnpaaren des Ständers (18) fluchten, wenigstens ein weiterer der dauermagnetischen Stäbe (30, 30') angeordnet ist.

7. Linearaktor nach einem der vorhergehenden Ansprüche, **dadurch gekennzeichnet, dass** der vorbestimmte Abstand A zwischen den magnetisch leitenden inneren Bereichen (50, 50a) so bemessen ist, dass er im Wesentlichen mit der Abmessung einer geraden Anzahl von dauermagnetischen Stäben (30, 30') der beiden Stapel (14, 14') in der Bewegungsrichtung B des Läufers (16) übereinstimmt.

8. Linearaktor nach einem der vorhergehenden Ansprüche, **dadurch gekennzeichnet, dass** jeweils zwei benachbarte dauermagnetische Stäbe (30, 30') der beiden Stapel (14, 14') des Läufers (16) durch magnetisch nicht wirksame Abstandshalter (34, 34') in einem vorbestimmten Abstand miteinander verbunden sind.

9. Linearaktor nach einem der vorhergehenden Ansprüche, **dadurch gekennzeichnet, dass** durch die Abmessungen der dauermagnetischen Stäbe (30) in der Bewegungsrichtung B des Läufers (16) und die Zähne (22) des Ständers (18) eine Polteilung definiert ist, die kleiner ist als die Abmessung der Ständerspule (28) in der Bewegungsrichtung B des Läufers (16).

10. Linearaktor nach einem der vorhergehenden Ansprüche, **dadurch gekennzeichnet, dass** die äußeren Bereiche (52) des Ständers (18) zusätzlich oder an Stelle der inneren Bereiche (52) des Ständers (18) wenigstens eine Ständerspule (28) aufweisen.

11. Linearaktor nach einem der vorhergehenden Ansprüche, **dadurch gekennzeichnet, dass** die Abmessung der Spulenanordnung (60, 60a) in Bewegungsrichtung des Läufers (16) größer ist als der Abstand zwischen zwei benachbarten Zahnpaaren des Ständers (18).

12. Unearaktor nach einem der vorhergehenden Ansprüche, **dadurch gekennzeichnet, dass** der Ständer (18) zumindest teilweise ein weichmagnetischer Formkörper, vorzugsweise aus gepresstem und/oder gesintertem Metallpulver ist.

## Claims

1. Linear actuator having a rotor (16) and a stator (18), wherein
. the rotor (16) has at least two stacks (14, 14') of permanently magnetic rods (30, 30') arranged one over another,
. the stator (18)
- has magnetically conducting inner (50, 50a) and outer (52, 52') areas,
- is at least partly formed of a soft magnetic material,
- has at least one pair of teeth (22a, 22a'; 22b, 22b'; 22c, 22c'; 22d, 22d'; 22e, 22e'; 22f, 22f) with teeth (22) located opposite each other, of which each pair of teeth receives a stack (14, 14') between them by forming an air gap (24, 24') in each case,
- has at least two magnetically conducting inner areas (50, 50a), which at their ends facing the rotor (16) have at least one of the teeth (22), and which are arranged at a predetermined distance (A) from each other in the direction of motion (B) of the rotor (16), and which are at least partially surrounded by a substantially hollow cylindrical coil arrangement (60, 60a), the central longitudinal axis (M) and magnetic flux of which are oriented approximately transversely to the direction of motion (B) of the rotor (16), and at least in sections essentially parallel to the central longitudinal axis of two teeth opposite each other of a tooth pair,
wherein
. adjacent rods (30, 30') of a stack (14, 14') of the rotor (16) have an alternating magnetic orientation (N -> S, S <- N), and are essentially aligned with the central longitudinal axis (Z) of two mutually opposite teeth (22) of a tooth pair (22a, 22a'; 22b, 22b'; 22c, 22c'; 22d, 22d'; 22e, 22e'; 22f, 22f'),
. the inner areas (50, 50a) of the stator (18) are located between the stacks (14, 14') of the rotor (16), and have teeth on their ends facing the stacks (14, 14'),
. the stator (18) has at least two magnetically conducting outer areas which are located outside the stack (14, 14') of the rotor (16), and which have, at their ends facing the stacks (14, 14') of the rotor (16), at least one of the teeth,
. the outer areas (52) of the stator (18) are comb-shaped and form a magnetic return path body in the direction of motion of the rotor (16), and are in the form of C-shaped yokes which are plugged into each other, and
. each coil arrangement (60, 60a) completely surrounds the respective one of the two inner areas (50, 50a) of the stator (18) over its entire extension.

2. Linear actuator having a rotor (16) and a stator (18), wherein
. the rotor (16) has at least one stack (14, 14') of permanently magnetic rods (30, 30') arranged one over another,
. the stator (18)
- has magnetically conducting inner (50, 50a) and outer (52, 52') areas,
- is at least partly formed of a soft magnetic material,
- has at least one pair of teeth (22a, 22a'; 22b, 22b'; 22c, 22c'; 22d, 22d'; 22e, 22e'; 22f, 22f') with teeth (22) located opposite each other, of which each pair of teeth receives a stack (14) of the rotor between them by forming an air gap (24, 24') in each case,
- has at least two magnetically conducting inner areas (50, 50a), which at their ends facing the rotor (16) have at least one of the teeth (22), and which are arranged at a predetermined distance (A) from each other in the direction of motion (B) of the rotor (16), and which are at least partially surrounded by a substantially hollow cylindrical coil arrangement (60, 60a), the central longitudinal axis (M) and magnetic flux of which are oriented approximately transversely to the direction of motion (B) of the rotor (16), and at least in sections essentially parallel to the central longitudinal axis of two teeth opposite each other of a tooth pair, wherein
. adjacent rods (30, 30') of a stack of the rotor (16) have an alternating magnetic orientation (N -> S, S <- N), and are essentially aligned with the central longitudinal axis (Z) of two mutually opposite teeth (22) of a tooth pair (22a, 22a'; 22b, 22b'; 22c, 22c'; 22d, 22d'; 22e, 22e'; 22f, 22f'),
. on one side of the stack (14) of the rotor (16), the stator (18) has two magnetically conducting inner areas (50, 50a), which are arranged at a predetermined distance (A) from each other in the direction of motion (B) of the rotor (16), and which have, at their ends facing the rotor (16), at least one of the teeth (22),
. each of the two inner areas (50, 50a) of the stator (18) is surrounded by an essentially hollow cylindrical coil arrangement (60, 60a), the central longitudinal axis (M) and magnetic flux of which are oriented approximately transversely to the direction of motion (B) of the rotor (16), and at least in sections are oriented essentially parallel to the central longitudinal axis of two mutually opposite teeth of a tooth pair,
. the two inner areas (50, 50a) of the stator (18) form the legs of a "U" on its side, its connecting yoke being formed by a magnetically conducting outer area (52'),
. the outer area (52) of the stator (18), outside the rotor (16), is essentially comb-shaped in cross-section, and at its end facing the stack (14) of the rotor (16) has teeth (22), which in shape correspond to the mirror image of the teeth of the inner areas (50, 50a) of the stator (18), and
. the outer areas (52, 52') of the stator (18) are comb-shaped, form a magnetic return path body in the direction of motion of the rotor, and are in the form of yokes which are plugged into each other.

3. Linear actuator according to Claim 1 or 2, **characterized in that** the rotor (16) has two or more permanently magnetic rods (30, 30') which are arranged in a stack (14, 14') at a predetermined distance from each other, and the magnetically conducting inner areas (50, 50a) of the stator (18) are arranged between the stacks (14, 14') of the rotor (16).

4. Linear actuator according to Claim 3, **characterized in that** the hollow cylindrical coil arrangement (60, 60a) has an essentially rectangular cross-section.

5. Linear actuator according to Claim 3 or 4, **characterized in that** each tooth (22) has, in the direction of motion B of the rotor (16), a dimension which essentially agrees with the dimension of a permanently magnetic rod (30, 30') in the direction of motion B of the rotor (16), so that in a predetermined position of the rotor (16), at least one tooth pair of the stator (18) is aligned with a permanently magnetic rod (30, 30').

6. Linear actuator according to Claim 5, **characterized in that** in the direction of motion B of the rotor (16), adjacent tooth pairs of the stator (18) are dimensioned, relative to the dimension of the permanently magnetic rods (30, 30') in the direction of motion B of the rotor (16), such that between two permanently magnetic rods, which are aligned with two mutually adjacent tooth pairs of the stator (18), at least one other of the permanently magnetic rods (30, 30') is arranged.

7. Linear actuator according to one of the preceding claims, **characterized in that** the predetermined distance A between the magnetically conducting inner areas (50, 50a) is dimensioned such that it essentially agrees with the dimension of an even number of permanently magnetic rods (30, 30') of the two stacks (14,14') in the direction of motion B of the rotor (16).

8. Linear actuator according to one of the preceding claims, **characterized in that** in each case, two adjacent permanently magnetic rods (30, 30') of the two stacks (14, 14') of the rotor (16) are connected to each other by magnetically inactive spacers (34, 34'), at a predetermined distance.

9. Linear actuator according to one of the preceding claims, **characterized in that** because of the dimensions of the permanently magnetic rods (30) in the direction of motion B of the rotor (16) and the teeth (22) of the stator (18), a pole pitch smaller than the dimension of the stator coil (28) in the direction of motion B of the rotor (16) is defined.

10. Linear actuator according to one of the preceding claims, **characterized in that** the outer areas (52) of the stator (18) have, in addition to or instead of the inner areas (52) of the stator (18), at least one stator coil (28).

11. Linear actuator according to one of the preceding claims, **characterized in that** the dimension of the coil arrangement (60, 60a) in the direction of motion of the rotor (16) is greater than the distance between two adjacent tooth pairs of the stator (18).

12. Linear actuator according to one of the preceding claims, **characterized in that** the stator (18) is at least partly a soft magnetic mould, preferably of pressed and/or sintered metal powder.

## Revendications

1. Actionneur linéaire équipé d'un rotor (16) et d'un stator (18),
- le rotor (16) présentant au moins deux empilements (14, 14') constitués de barres à aimantation permanente disposées les unes sur les autres (30, 30'),
- le stator (18)
- présentant des zones internes (50, 50a) et des zones externes (52, 52') magnétoconductrices,
- étant constitué au moins partiellement d'un matériau magnétique doux et
- présentant au moins une paire de dents (22a, 22a' ; 22b, 22b' ; 22c, 22c' ; 22d, 22d' ; 22e, 22e' ; 22f, 22f) avec des dents (22) opposées les unes aux autres, dont chaque paire de dents reçoit respectivement entre ses dents un empilement (14, 14') en formant un entrefer (24, 24'),
- présentant au moins deux zones internes magnétoconductrices (50, 50a) qui présentent à leurs extrémités tournées vers le rotor (16) au moins une des dents (22) et sont disposées à une distance prédéterminée (A) l'une de l'autre dans le sens de déplacement (B) du rotor (16) et respectivement entourées au moins pour partie d'un dispositif à bobine pour l'essentiel cylindrique creux, dont l'axe longitudinal médian (M) et le courant magnétique sont orientés de manière à peu près transversale au sens de déplacement (B) du rotor (16) et au moins par endroits de manière sensiblement parallèle à l'axe longitudinal médian de deux dents opposées l'une à l'autre d'une paire de dents,
- des barres voisines (30, 30') d'un empilement (14, 14') du rotor (16) ayant une orientation magnétique alternante (N -> S, S <- N) et étant alignées pour l'essentiel avec l'axe longitudinal médian (Z) de deux dents (22) opposées l'une à l'autre d'une paire de dents (22a, 22a' ; 22b, 22b' ; 22c, 22c' ; 22d, 22d' ; 22e, 22e' ; 22f, 22f),
- les zones internes (50, 50a) du stator (18) se trouvant entre les empilements (14, 14') du rotor (16) et présentant des dents à leurs extrémités tournées vers les empilements (14, 14'),
- le stator (18) présentant au moins deux zones externes magnétoconductrices situées à l'extérieur de l'empilement (14, 14') du rotor (16) qui présentent à leurs extrémités tournées vers les empilements (14, 14') du rotor (16) au moins une des dents,
- les zones externes (52) du stator (18) se présentant en forme de peigne et constituant un élément de court-circuit dans le sens de déplacement du rotor (16) et étant conçues comme des étriers en forme de C emboîtés les uns dans les autres et
- chaque dispositif à bobine (60, 60a) entourant complètement, sur toute son étendue, la zone correspondante des deux zones internes (50, 50a) du stator (18).

2. Actionneur linéaire équipé d'un rotor (16) et d'un stator (18),
- le rotor (16) présentant au moins un empilement (14, 14') constitués de barres à aimantation permanente disposées les unes sur les autres (30, 30'),
- le stator (18)
- présentant des zones internes (50, 50a) et des zones externes (52, 52') magnétoconductrices,
- étant constitué au moins partiellement d'un matériau magnétique doux et
- présentant au moins une paire de dents (22a, 22a'; 22b, 22b'; 22c, 22c'; 22d, 22d'; 22e, 22e'; 22f, 22f) avec des dents (22) opposées les unes aux autres, dont chaque paire de dents reçoit respectivement entre ses dents un empilement (14) en formant un entrefer (24, 24'),
- présentant au moins deux zones internes magnétoconductrices (50, 50a) qui présentent à leurs extrémités tournées vers le rotor (16) au moins une des dents (22) et sont disposées à une distance prédéterminée (A) l'une de l'autre dans le sens de déplacement (B) du rotor (16) et respectivement entourées au moins pour partie d'un dispositif à bobine pour l'essentiel cylindrique creux, dont l'axe longitudinal médian (M) et le courant magnétique sont orientés de manière à peu près transversale au sens de déplacement (B) du rotor (16) et au moins par endroits de manière sensiblement parallèle à l'axe longitudinal médian de deux dents opposées l'une à l'autre d'une paire de dents,
- des barres voisines (30, 30') d'un empilement (14, 14') du rotor (16) ayant une orientation magnétique alternante (N -> S, S <- N) et étant alignées pour l'essentiel avec l'axe longitudinal médian (Z) de deux dents (22) opposées l'une à l'autre d'une paire de dents (22a, 22a' ; 22b, 22b' ; 22c, 22c' ; 22d, 22d' ; 22e, 22e' ; 22f, 22f'),
- le stator (18) ayant, sur un côté de l'empilement (14) du rotor (16), deux zones internes (50, 50a) magnétoconductrices qui sont disposées à une distance prédéterminée (A) l'une de l'autre dans le sens de déplacement (B) du rotor (16) et présentent à leurs extrémités tournées vers le rotor (16) au moins une des dents (22),
- chacune des deux zones internes (50, 50a) du stator (18) étant respectivement entourée par un dispositif à bobine (60, 60a) pour l'essentiel cylindrique creux, dont l'axe longitudinal médian (M) et le courant magnétique sont orientés de manière à peu près transversale au sens de déplacement (B) du rotor (16) et au moins par endroits de manière sensiblement parallèle à l'axe longitudinal médian de deux dents opposées l'une à l'autre d'une paire de dents,
- les deux zones internes (50, 50a) du stator (18) formant les bras d'un "U" couché dont l'étrier de liaison est constitué par une zone externe magnétoconductrice (52'),
- la zone externe (52) du stator (18) située à l'extérieur du rotor (16) étant conçue en coupe transversale pour l'essentiel en forme de peigne et présentant à son extrémité tournée vers l'empilement (14) des dents (22) qui, de par leur forme, correspondent symétriquement aux dents des zones internes (50, 50a) du stator (18), et
- les zones externes (52) du stator (18) se présentant en forme de peigne et constituant un élément de court-circuit dans le sens de déplacement du rotor (16) et étant conçues comme des étriers en forme de C emboîtés les uns dans les autres.

3. Actionneur linéaire selon la revendication 1 ou 2, **caractérisé en ce que** le rotor (16) présente deux empilements (14, 14'), ou plus, constitués de barres à aimantation permanente (30, 30') et disposés à une distance prédéterminée l'un de l'autre, et les zones internes magnétoconductrices (50, 50a) du stator (18) sont disposées entre les empilements (14, 14') du rotor (16).

4. Actionneur linéaire selon la revendication 3, **caractérisé en ce que** le dispositif à bobine cylindrique creux (60, 60a) présente une section pour l'essentiel rectangulaire.

5. Actionneur linéaire selon la revendication 3 ou 4, **caractérisé en ce que** chaque dent (22) présente dans le sens de déplacement B du rotor (16) un dimensionnement qui correspond pour l'essentiel au dimensionnement d'une barre à aimantation permanente (30, 30') dans le sens de déplacement B du rotor (16) si bien que, dans une position prédéterminée du rotor (16), au moins une paire de dents du stator (18) est alignée avec une barre à aimantation permanente (30, 30').

6. Actionneur linéaire selon la revendication 5, **caractérisé en ce que** dans le sens de déplacement B du rotor (16) des paires de dents voisines du stator (18) sont dimensionnées de telle sorte par rapport au dimensionnement des barres à aimantation permanente (30, 30') dans le sens de déplacement B du rotor (16) qu'au moins une barre à aimantation permanente (30, 30') supplémentaire est disposée entre deux barres à aimantation permanente alignées avec deux paires de dents voisines l'une de l'autre du stator (18).

7. Actionneur linéaire selon l'une des revendications précédentes, **caractérisé en ce que** la distance prédéterminée A entre les zones internes magnétoconductrices (50, 50a) est dimensionnée de telle sorte qu'elle correspond pour l'essentiel au dimensionnement d'un nombre pair de barres à aimantation permanente (30, 30') des deux empilements (14, 14') dans le sens de déplacement B du rotor (16).

8. Actionneur linéaire selon l'une des revendications précédentes, **caractérisé en ce que** deux barres à aimantation permanente (30, 30') voisines des deux empilements (14, 14') du rotor (16) sont reliées à chaque fois l'une à l'autre au moyen d'écarteurs magnétiquement non actifs (34, 34') selon une distance prédéterminée.

9. Actionneur linéaire selon l'une des revendications précédentes, **caractérisé en ce que**, de par le dimensionnement des barres à aimantation permanente (30) dans le sens de déplacement B du rotor (16) et les dents (22) du stator (18), il est défini un pas polaire qui est inférieur au dimensionnement de la bobine de stator (28) dans le sens de déplacement B du rotor (16).

10. Actionneur linéaire selon l'une des revendications précédentes, **caractérisé en ce que** les zones externes (52) du stator (18) présentent en plus ou au lieu des zones internes (52) du stator (18) au moins une bobine de stator (28).

11. Actionneur linéaire selon l'une des revendications précédentes, **caractérisé en ce que** le dimensionnement du dispositif à bobine (60, 60a) dans le sens de déplacement du rotor (16) est supérieur à la distance qui sépare deux paires de dents voisines du stator (18).

12. Actionneur linéaire selon l'une des revendications précédentes, **caractérisé en ce que** le stator (18) constitue au moins partiellement un corps moulé réalisé de préférence à partir de poudre métallique moulée par compression et/ou frittée.
